# EUROPÄISCHE PATENTSCHRIFT

(11) **EP 1 207 982 B1**
(45) Veröffentlichungstag und Bekanntmachung des Hinweises auf die Patenterteilung: **16.03.2005**
(21) Anmeldenummer: 01929301.8
(22) Anmeldetag: 30.03.2001
(51) Int. Cl.: B25F 5/00

(54) **HANDWERKZEUGMASCHINE**
MANUAL MACHINE TOOL
MACHINE-OUTIL A MAIN

(30) Priorität: 17.06.2000 DE 10029898
(43) Veröffentlichungstag der Anmeldung: 29.05.2002
(73) Patentinhaber: ROBERT BOSCH GMBH, 70442 Stuttgart (DE)
(72) Erfinder: MAMBER, Juergen, 70771 Leinfelden-Echterdingen (DE); SCHWEIZER, Holger, 71254 Ditzingen (DE)
(86) Internationale Anmeldenummer: PCT/DE2001/001265
(87) Internationale Veröffentlichungsnummer: WO 2001/098035

(56) Entgegenhaltungen:
- EP-A- 0 792 723
- EP-A- 0 909 614
- WO-A-99/10132
- US-A- 6 035 947

## Beschreibung

### Stand der Technik

Die Erfindung geht aus von einer Handwerkzeugmaschine nach dem Oberbegriff des Anspruchs 1. Eine solche Handwerkzeugmaschine ist z.B. aus der WO-A-99 10132 bekannt.

Aus der DE 198 03 454 A1 ist eine Schlagbohrmaschine mit einem in einem Gehäuse angeordneten Antriebsmotor bekannt, die mit einer Arretiervorrichtung versehen ist. Mit der Arretiervorrichtung ist eine vom Antriebsmotor antreibbare Bohrspindel gegenüber dem Gehäuse der Schlagbohrmaschine drehfest arretierbar, so daß ein mit der Bohrspindel verschraubtes Bohrfutter von der Bohrspindel gelöst und/oder ein Werkzeug schlüssellos in das Bohrfutter eingespannt werden kann. Die Arretiervorrichtung ist auf einer Zwischenwelle angeordnet, die über zwei Getriebestufen mit der Bohrspindel koppelbar ist.

Die Arretiervorrichtung öffnet selbsttätig bei einer Drehmomentübertragung vom Antriebsmotor zum Bohrfutter und sperrt selbsttätig bei einer Drehmomentübertragung vom Bohrfutter zum Antriebsmotor.

### Vorteile der Erfindung

Die Erfindung geht aus von einer Handwerkzeugmaschine mit einer über einen Antriebsmotor und über eine Abtriebswelle zumindest drehend antreibbaren Werkzeughalterung, die eine in Drehrichtung der Abtriebswelle betätigbare Spannvorrichtung zur Befestigung von Werkzeugen aufweist, und mit einer Arretiervorrichtung, über die die Abtriebswelle zum Schließen und Lösen der Spannvorrichtung gegenüber einem Maschinengehäuse drehfest koppelbar ist, und die bei einer Drehmomentübertragung vom Antriebsmotor zur Werkzeughalterung selbsttätig öffnet und bei einer Drehmomentübertragung von der Werkzeughalterung zum Antriebsmotor selbsttätig sperrt.

Es wird vorgeschlagen, daß die Arretiervorrichtung auf der Abtriebswelle angeordnet ist. Die erfindungsgemäße Lösung kann dadurch vorteilhaft bei Handwerkzeugmaschinen ohne Zwischenwelle eingesetzt werden, wie insbesondere bei Ein-Gang-Bohr- bzw. Schlagbohrmaschinen usw. Mit der Arretiervorrichtung können schlüssellos Werkzeuge in die Werkzeughalterung eingespannt und gelöst werden, insbesondere in einer als Bohrfutter ausgeführten Werkzeughalterung. Ferner kann eine Werkzeughalterung einfach auf die Abtriebswelle aufgeschraubt und von der Abtriebswelle abgeschraubt werden. Die Abtriebswelle kann ein- oder zweiteilig oder auch einstückig mit einer Antriebswelle des Antriebsmotors ausgeführt sein.

Ist ein Teil der Arretiervorrichtung von einem auf der Abtriebswelle angeordneten Zahnrad gebildet, über das die Abtriebswelle antreibbar ist, können vorteilhaft Bauteile, Bauraum, Montageaufwand und Kosten eingespart werden, wobei die Arretiervorrichtung grundsätzlich auch von zusätzlichen Bauteilen gebildet sein kann.

Die Arretiervorrichtung kann durch verschiedene, dem Fachmann als sinnvoll erscheinende Kupplungsarten realisiert werden. Eine besonders einfache, platzsparende und kostengünstige Konstruktion mit wenigen Bauteilen kann jedoch mit einer Klauenkupplung erreicht werden, die zumindest eine Klaue aufweist, die im Zahnrad befestigt ist. Die Klaue wird vorzugsweise von einem Bolzen mit einer runden Querschnittsfläche gebildet. Derartige Bolzen können vorteilhaft als kostengünstige Standardbauteile ausgeführt werden und können ferner in kostengünstig herstellbaren Ausnehmungen befestigt werden, beispielsweise in Bohrungen.

In einer weiteren Ausgestaltung der Erfindung wird ferner vorgeschlagen, daß die Arretiervorrichtung eine Scheibe aufweist, die zumindest ein Mitnahmeelement zur Drehmomentübertragung aufweist, wobei die Scheibe drehfest auf einem ersten Lagersitz der Abtriebswelle und das Zahnrad drehbar auf einem zweiten Lagersitz der Abtriebswelle angeordnet sind. Es kann eine vorteilhaft platzsparende und kostengünstige Konstruktion mit einer insbesondere einteiligen Abtriebswelle erreicht werden, wobei grundsätzlich auch die Scheibe drehbar und das Zahnrad drehfest auf der Abtriebswelle angeordnet werden können.

Ferner können Bauteile eingespart werden, indem die Abtriebswelle über die Scheibe in zumindest eine axiale Richtung fixiert ist, beispielsweise indem die Scheibe vorzugsweise auf die Abtriebswelle aufgepreßt ist und in zumindest eine axiale Richtung über einen Anschlag fixiert ist, der beispielsweise von einem Gehäuseteil gebildet sein kann.

Die Abtriebswelle hat vorzugsweise im Bereich des ersten Lagersitzes einen von einer Zylinderform abweichenden Querschnitt zur Bildung eines geometrischen Formschlusses mit der Scheibe. Die Scheibe kann dadurch besonders sicher ohne zusätzlichen Bauteile drehfest mit der Abtriebswelle verbunden werden. Grundsätzlich kann die Scheibe jedoch auch über andere, dem Fachmann als sinnvoll erscheinende kraftschlüssige, formschlüssige und/oder stoffschlüssige Verbindungen auf der Abtriebswelle drehfest befestigt werden, wie beispielsweise aufpressen usw.

In einer weiteren Ausgestaltung wird ferner vorgeschlagen, daß die Scheibe auf einer der Werkzeughalterung zugewandten Seite des Zahnrads angeordnet ist. Mit geringen konstruktiven Änderungen können bestehende, ausgereifte Konstruktionen genutzt werden, insbesondere kann bei Schlagbohrmaschinen ein Schlagwerk standardmäßig auf der der Werkzeughalterung abgewandten Seite des Zahnrads angeordnet werden.

Um ferner Bauraum, zusätzliche Bauteile und Montageaufwand einzusparen, ist vorteilhaft in einer Sperrstellung der Arretiervorrichtung die Abtriebswelle über die Scheibe und über zumindest einen Körper in einem Bauteil bzw. in einem Gehäuseteil in Drehrichtung abgestützt, über das zudem Lagerkräfte der Abtriebswelle im Maschinengehäuse abgestützt sind. Die Scheibe wird in der Sperrstellung der Arretiervorrichtung vorzugsweise über einen oder mehrere Wälzkörper in einer mit einem Gehäuseteil drehfest verbundenen Scheibe oder direkt im Gehäuseteil abgestützt. Eine zusätzliche Scheibe kann vorteilhaft vom Material gezielt auf die auftretenden Belastungen abgestimmt werden, wobei bei einer Abstützung direkt in einem Gehäuseteil zusätzliche Bauteile, Bauraum und Gewicht eingespart werden können.

Die Lagerkräfte können direkt im Bauteil oder können vorteilhaft im Bauteil bzw. Gehäuseteil über ein zum Gehäuseteil separat ausgeführtes, topfförmiges Bauteil abgestützt sein. Das separat ausgeführte, topfförmige Bauteil kann vorteilhaft aus Metall oder einem hoch belastbaren Material mit einer dünnen Wandstärke hergestellt werden, wodurch Bauraum eingespart werden kann. Ferner kann das separate, topfförmige Bauteil kostengünstig an verschiedene Ausführungen mit unterschiedlichen Lagerungen angepaßt werden, beispielsweise an Ausführungen mit Nadellager und an Ausführungen mit Gleitlager usw.

Ferner bietet sich die erfindungsgemäße Lösung besonders vorteilhaft an, bei Schleifmaschinen, insbesondere bei Winkelschleifmaschinen, eingesetzt zu werden. Eine manuell zu bedienende Arretiervorrichtung kann eingespart, der Bauraum kann reduziert und der Komfort kann gesteigert werden. Die Arretiervorrichtung kann bei einer Winkelschleifmaschine vor oder nach einem Winkelgetriebe angeordnet sein. Ist die Arretiervorrichtung vor dem Winkelgetriebe angeordnet, treten in der Regel an der Arretiervorrichtung zwar hohe Drehzahlen jedoch kleine Drehmomente auf, wodurch diese platzsparend und mit einem geringen Gewicht ausgeführt werden kann. Ist die Arretiervorrichtung nach dem Winkelgetriebe angeordnet, treten an der Arretiervorrichtung kleine Drehzahlen und große Drehmomente auf, jedoch kann das Winkelgetriebe vor großen Drehmomenten bei der Montage und der Demontage eines Einsatzwerkzeugs geschützt werden. Je nach Ausgestaltung und Anwendungsbereich der handgeführten Winkelschleifmaschine, kann die eine oder die andere Alternative von Vorteil sein.

Ist zumindest ein Teil der Arretiervorrichtung, insbesondere ein Arretierring, durch die Herstellung eines Bauteils des Winkelgetriebes mit diesem Bauteil fest verbunden, kann der Montageaufwand reduziert werden. Wird der Arretierring in einen Bauteil des Winkelgetriebes eingespritzt, vorteilhaft in einen Kunststofflagerflansch, kann der Arretierring trotz insgesamt einer leichten Bauweise und einer realisierbaren einfachen Montage aus einem harten, seiner Funktion angepaßten Material hergestellt werden, beispielsweise aus einem gehärteten Metall. Grundsätzlich kann der Arretierring jedoch auch einstückig mit einem Gehäuseteil ausgeführt oder mit diesem nach dessen Herstellung kraftschlüssig, formschlüssig und/oder stoffschlüssig verbunden sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Schlagbohrmaschine,
- Fig. 2: einen vergrößerten Ausschnitt II aus Fig. 1 im Längsschnitt,
- Fig. 3: eine Explosionsdarstellung von Bauteilen aus Fig. 2,
- Fig. 4: einen Schnitt entlang der Linie IV-IV in Fig. 2, in einer Öffnungsstellung einer Arretiervorrichtung,
- Fig. 5: einen vergrößerten Ausschnitt V in Fig. 4,
- Fig. 6: einen Schnitt entlang der Linie IV-IV in Fig. 2 in einer Sperrstellung der Arretiervorrichtung,
- Fig. 7: einen vergrößerten Ausschnitt VII in Fig. 6,
- Fig. 8: einen Winkelschleifer von oben,
- Fig. 9: eine Explosionszeichnung eines mit IX gekennzeichneten Bereichs in Fig. 8 und
- Fig. 10: eine Variante nach Fig. 9.

### Beschreibung der Ausführungsbeispiele

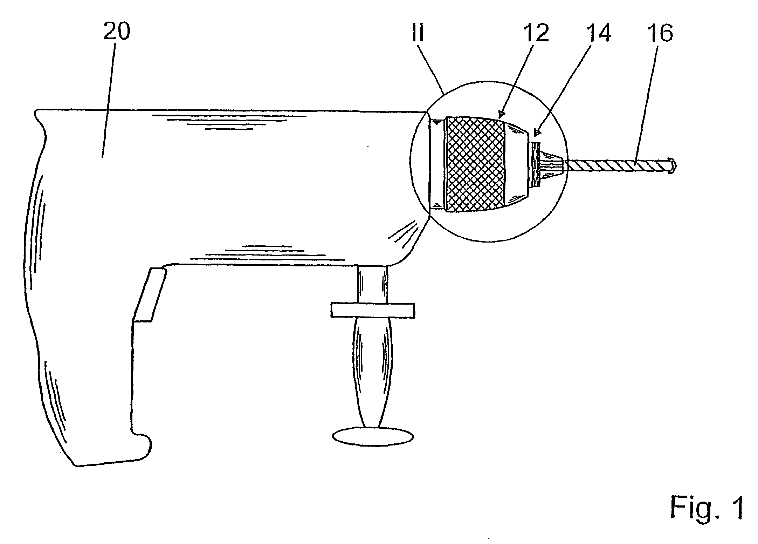

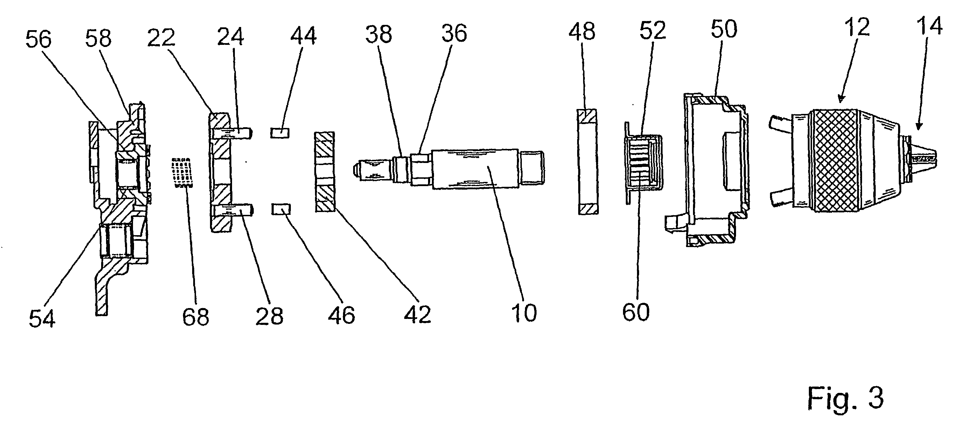

Fig. 1 zeigt eine schematisch dargestellte Schlagbohrmaschine mit einem in einem Maschinengehäuse 20 angeordneten, nicht näher dargestellten Antriebsmotor, mit dem über eine Antriebswelle 72 ein auf einer Bohrspindel 10 angeordnetes Stirnrad 22 und über die Bohrspindel 10 ein Schnellspannbohrfutter 12 drehend und schlagend antreibbar ist (Fig. 1, 2 und 3).

Die Bohrspindel 10 ist auf der dem Bohrfutter 12 abgewandten Seite des Stirnrads 22 in einem Nadellager 54 gelagert, das über eine Rastscheibe 56 eines Rastenschlagwerks 64 und über eine Lagerbrücke 58 im Maschinengehäuse 20 abgestützt ist. Die Rastscheibe 56 kann über eine nicht näher dargestellte Schaltvorrichtung mit ihren Rasten 66 in axialer Richtung 40 gegen eine Druckfeder 68 mit an das Stirnrad 22 angeformte Rasten 70 in Verbindung gebracht werden. Auf der dem Bohrfutter 12 zugewandten Seite des Stirnrads 22 ist die Bohrspindel 10 in einem Nadellager 60 gelagert, das über ein topfförmiges Blechteil 52 und über einen Kunststoffgetriebedeckel 50 im Maschinengehäuse 20 abgestützt ist.

Das Bohrfutter 12 ist über eine Gewindeverbindung 62 mit der Bohrspindel verbunden und besitzt eine Spannvorrichtung 14 zum Befestigen von Bohrern 16, die in Drehrichtung der Bohrspindel 10 betätigbar ist. Ferner besitzt die Schlagbohrmaschine eine Arretiervorrichtung 18, über die die Bohrspindel 10 zum Lösen und Schließen der Spannvorrichtung 14 gegenüber dem Maschinengehäuse 20 drehfest koppelbar ist und die bei einer Drehmomentübertragung vom Antriebsmotor zum Bohrfutter 12 selbsttätig öffnet und bei einer Drehmomentübertragung vom Bohrfutter 12 zum Antriebsmotor selbsttätig sperrt.

Erfindungsgemäß ist die als Klauenkupplung ausgeführte Arretiervorrichtung 18 auf der Bohrspindel 10 angeordnet. Ein Teil der Arretiervorrichtung 18 wird von dem auf der Bohrspindel 10 auf einem Lagersitz 38 drehbar gelagerten Stirnrad 22 gebildet, über das die Bohrspindel 10 vom Antriebsmotor antreibbar ist. Im Stirnrad 22 sind vier als Bolzen ausgeführte achsparallel ausgerichtete Klauen 24, 26, 28, 30 mit jeweils einer runden Querschnittsfläche in Bohrungen eingepreßt.

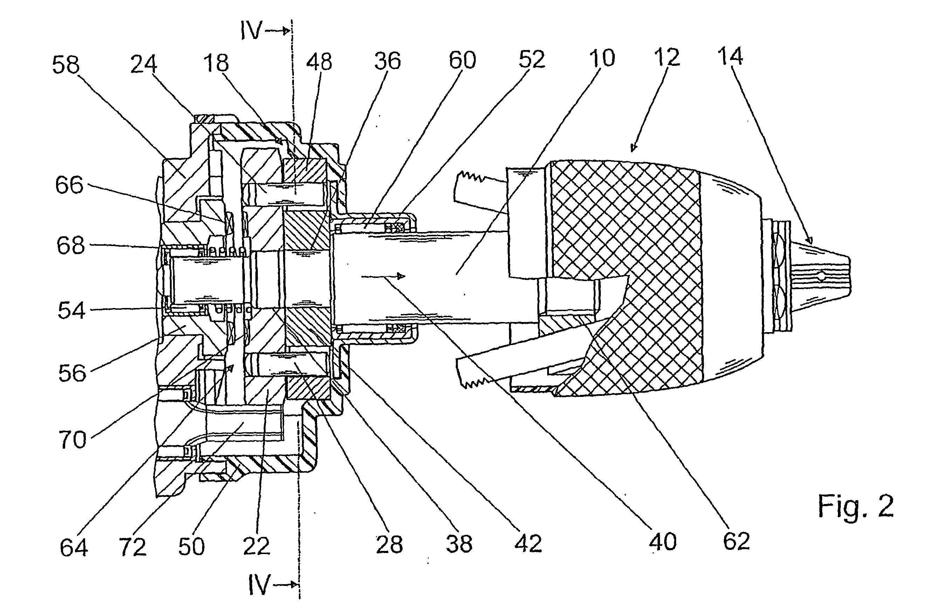

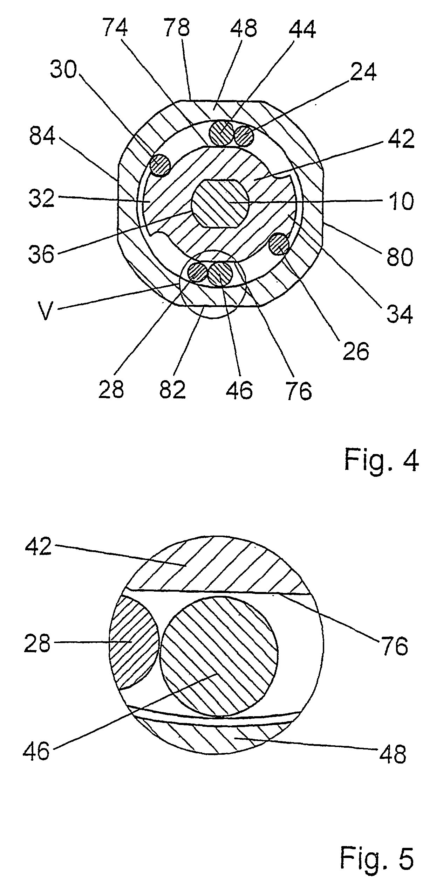

Ferner besitzt die Arretiervorrichtung 18 auf der dem Bohrfutter 12 zugewandten Seite des Stirnrads 22 eine auf die Bohrspindel 10 aufgepreßte Scheibe 42, an der zwei sich radial erstreckende Mitnahmeelemente 32, 34 zur Drehmomentübertragung angeformt sind (Fig. 2 und 4). Die Mitnahmeelemente 32, 34, sind derart geformt, daß die Scheibe 42 zwischen den benachbarten Klauen 24, 26, 28, 30 begrenzt verdrehbar ist.

Die Scheibe 42 hat an ihrem Außenumfang im Anschluß an die Mitnahmeelemente 32, 34 etwa eine zylindrische Grundform, die mittig zwischen den benachbarten Mitnahmeelementen 32, 34 in je eine Abflachung 74, 76 übergeht. Die Scheibe 42 ist von einem Arretierring 48 umgeben, der eine zylindrische Grundform mit vier Abflachungen 78, 80, 82, 84 aufweist, über die er formschlüssig im Getriebedeckel 50 drehfest gehalten ist. Der Arretierring 48 weist aufgrund der Abflachungen 74, 76 der Scheibe 42 gegenüber der Scheibe 42 einen unterschiedlichen radialen Abstand auf, und zwar im Bereich der Abflachungen 74, 76 einen größeren und im Bereich der zylindrischen Grundform einen kleineren radialen Abstand. Die Klauen 24, 26, 28, 30 besitzen im Bereich der zylindrischen Grundform der Scheibe 42 ein geringes Bewegungsspiel.

Im mittleren Bereich der Abflachungen 74, 76 der Scheibe 42 sind zwischen der Scheibe 42 und dem Arretierring 48 zylindrische Wälzkörper 44, 46 mit geringem Bewegungsspiel aufgenommen, deren Durchmesser größer ist als ein Durchmesser der Klauen 24, 26, 28, 30.

Die Scheibe 42 ist auf einem Lagersitz 36 der Bohrspindel 10 aufgepreßt, wobei die Bohrspindel 10 im Bereich des Lagersitzes 36 der Scheibe 42 einen von einer Zylinderform abweichenden Querschnitt zur Bildung eines geometrischen Formschlusses in Drehrichtung mit der Scheibe 42 hat (Fig. 4). Über die Scheibe 42 ist die Bohrspindel 10 in eine axiale Richtung 40 fixiert, und zwar in Richtung 40 des Bohrfutters 12 über einen vom Getriebedeckel 50 gebildeten Anschlag. Der Getriebedeckel 50 ist im Maschinengehäuse 20 fest angeordnet.

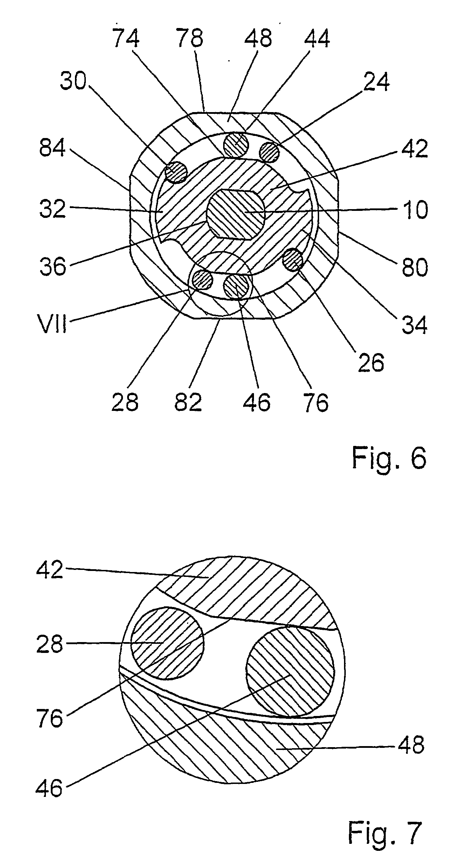

Treibt der Antriebsmotor über die Antriebswelle 72 das Stirnrad 22 an, so wird das Drehmoment vom Stirnrad 22 über die Klauen 24, 26, 28, 30 auf die Scheibe 42 und von der Scheibe 42 über die Bohrspindel 10 auf das Bohrfutter 12 übertragen. Während die Klauen 26, 30 an den Mitnahmeelementen 32, 34 angreifen und das Drehmoment auf die Scheibe 42 übertragen, sind die Klauen 24, 28 in Drehrichtung vor den Wälzkörpern 44, 46 angeordnet und halten diese im mittleren Bereich der Abflachungen 74, 76, in dem die Wälzkörper 44, 46 ein geringes Bewegungsspiel zur Scheibe 42 und zum Arretierring 48 besitzen (Fig. 4 und 5). Ein Verklemmen der Wälzkörper 44, 46 wird verhindert, und die Arretiervorrichtung 18 ist geöffnet. Wird bei abgeschaltetem Antriebsmotor ein Drehmoment vom Bohrfutter 12 über die Bohrspindel 10 auf die Scheibe 42 übertragen, wirken die Mitnahmeelemente 32, 34 drehmomentübertragend auf die Klauen 26, 30 (Fig. 6). Die Wälzkörper 44, 46 werden aufgrund ihres Beharrungsvermögens in einen Randbereich der Abflachungen 74, 76 gedrängt und verklemmen sich zwischen dem Arretierring 48 und der Scheibe 42 (Fig. 6 und 7). Die Bohrspindel 10 ist über die Scheibe 42, die Wälzkörper 44, 46 und über den Arretierring 48 drehfest im Getriebedeckel 50 abgestützt. Die Bohrspindel 10 wird selbsttätig gehäusefest arretiert. Bohrer 16 können im Bohrfutter 12 gespannt und gelöst werden und/oder das Bohrfutter 12 kann auf die Bohrspindel 10 aufgeschraubt bzw. von der Bohrspindel 10 abgeschraubt werden, ohne daß von Hand ein Gegendrehmoment aufgebracht werden muß.

Die Arretiervorrichtung 18 ist symmetrisch ausgeführt, so daß vom Antriebsmotor ein Drehmoment in beide Drehrichtungen über die Arretiervorrichtung 18 auf die Bohrspindel 10 und das Bohrfutter 12 übertragen werden kann. In beide Drehrichtungen öffnet die Arretiervorrichtung 18 selbsttätig. Ferner sperrt die Arretiervorrichtung 18 bei abgeschaltetem Antriebsmotor in beide Drehrichtungen, wenn ein Drehmoment vom Bohrfutter 12 über die Bohrspindel 10 auf die Scheibe 42 übertragen wird.

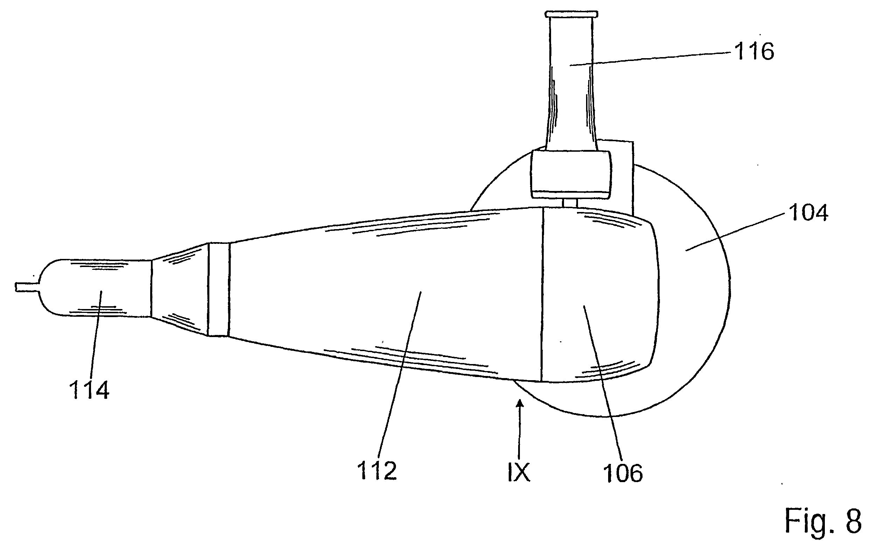

Fig. 8 zeigt eine Winkelschleifmaschine von oben mit einem in einem Gehäuse 112 gelagerten, nicht näher dargestellten Elektromotor. Die Winkelschleifmaschine ist über einen ersten, im Gehäuse 112 auf der einer Trennscheibe 104 abgewandten Seite integrierten, sich in Längsrichtung erstreckenden Handgriff 114 und über einen zweiten an einem Getriebegehäuse 106 im Bereich der Trennscheibe 104 befestigten, sich quer zur Längsrichtung erstreckenden Handgriff 116 führbar.

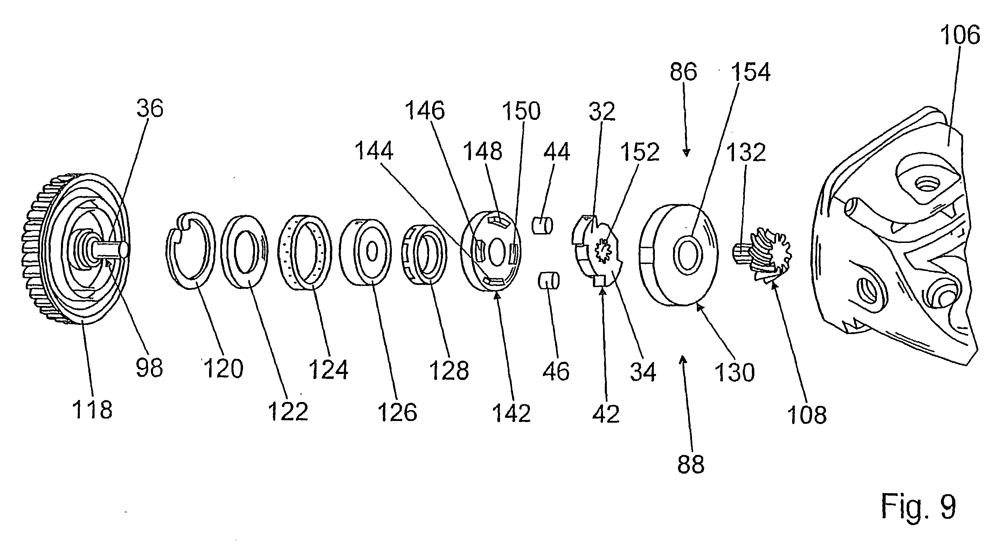

In Fig. 9 ist eine Explosionszeichnung eines in Fig. 8 mit IX gekennzeichneten Bereichs der Winkelschleifmaschine mit einer Arretiervorrichtung 86 dargestellt. Im wesentlichen gleichbleibende Bauteile sind in den dargestellten Ausführungsbeispielen grundsätzlich mit den gleichen Bezugszeichen beziffert. Ferner kann bezüglich gleichbleibender Merkmale und Funktionen auf die Beschreibung zum Ausführungsbeispiel in Fig. 1 bis 7 verwiesen werden.

Die Arretiervorrichtung 86 ist auf einer Abtriebswelle 98 des Elektromotors der Winkelschleifmaschine angeordnet, und zwar im Kraftfluß des Elektromotors vor einem Winkelgetriebe 88 der Winkelschleifmaschine. Ausgehend von einem Lüfterrad 118 sind auf der Abtriebswelle 98 des Elektromotor ein Sprengring 120 zur axialen Fixierung, eine Beilagescheibe 122 zur Bildung einer axialen Abstützfläche, ein Filzring 124 mit Schmiermittel, ein Kugellager 126 zur Lagerung der Abtriebswelle 98, ein Gummiring 128 zur gedämpften Lagerung des Kugellagers 126 und eine Abtriebsscheibe 142 mit vier Klauen 144, 146, 148, 150 angeordnet, die im montierten Zustand über einen Lagersitz 36 drehfest mit der Abtriebswelle 98 verbunden ist. In einer Ebene der Klauen 144, 146, 148, 150 sind eine Scheibe 42 mit zwei Mitnahmeelementen 32, 34 und zwei zylindrische Wälzkörper 44, 46 angeordnet. Die Scheibe 42 ist radial nach außen von einem im Getriebegehäuse 106 drehfest gelagerten Arretierring 130 umgeben und ist über eine Innenverzahnung 152 mit einer Wellenverzahnung 132 eines Ritzel 108 drehfest verbunden. Das Ritzel 108 ist über ein Gleitlager 154 drehbar im Arretierring 130 gelagert.

Durch die Verbindung über die Innenverzahnung 152 und die Wellenverzahnung 132 kann eine einfache Montage erreicht werden. Grundsätzlich könnte das Ritzel jedoch auch fest mit der Scheibe verbunden sein. Über das Ritzel 108 wird über ein nicht näher dargestelltes Tellerrad des Winkelgetriebes 88 auf eine Schleifspindel abgetrieben.

Die Arretiervorrichtung 86 besitzt grundsätzlich das gleiche Funktionsprinzip wie die Arretiervorrichtung 18. Ein Antriebsmoment des Elektromotors wird von der Abtriebswelle 98, über die Abtriebsscheibe 142, die Klauen 144, 146, 148, 150, die Mitnahmeelemente 32, 34 der Scheibe 42 auf das Ritzel 108 und vom Ritzel 108 über das nicht näher dargestellte Tellerrad auf die Schleifspindel übertragen. Ein Drehmoment von der Schleifspindel in Richtung Elektromotor wird dagegen über das Tellerrad, über das Ritzel 108, über die Scheibe 42, die Wälzkörper 44, 46 und über den Arretierring 130 im Getriebegehäuse 106 abgestützt. Die Schleifspindel ist zur Montage und zur Demontage der Trennscheibe 104 arretiert.

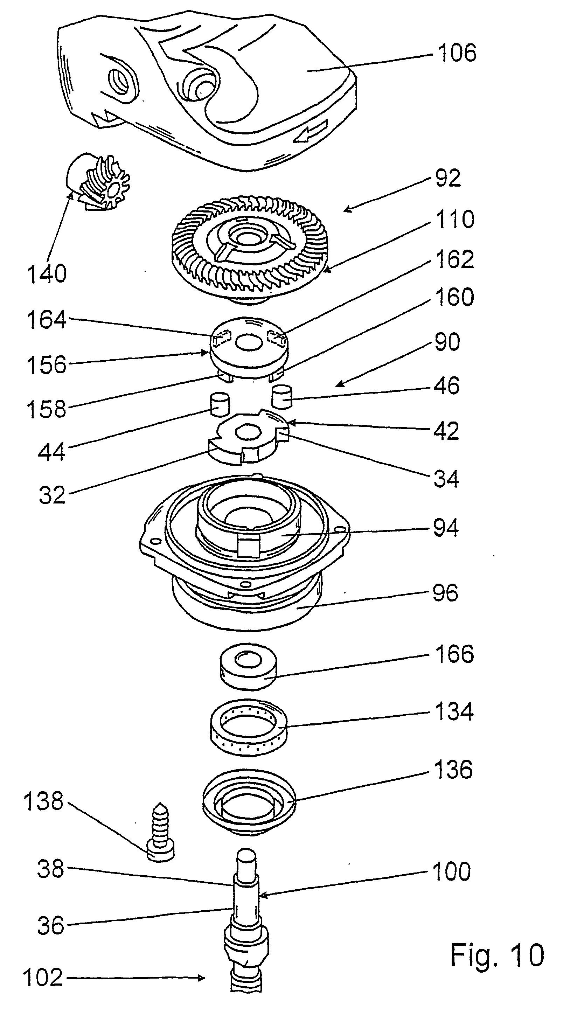

In Fig. 10 ist eine Alternative zum Ausführungsbeispiel in Fig. 9 mit einer Arretiervorrichtung 90 dargestellt. Die Arretiervorrichtung 90 ist auf einer Abtriebswelle 100 eines Winkelgetriebes 92 bzw. auf einer Schleifspindel angeordnet. Ausgehend von einem Tellerrad 110 des Winkelgetriebes 92, ist in Richtung einer an die Abtriebswelle 100 angeformten Werkzeughalterung 102 auf der Abtriebswelle 100 eine Abtriebsscheibe 156 angeordnet, die drehfest mit dem Tellerrad 110 verbunden ist. An der Abtriebsscheibe 156 sind vier sich in Richtung der Werkzeughalterung 102 erstreckende Klauen 158, 160, 162, 164 angeformt. In einer Ebene der Klauen 158, 160, 162, 164 sind eine Scheibe 42 mit zwei Mitnahmeelementen 32, 34 und zwei zylindrische Wälzkörper 44, 46 angeordnet. Ein Arretierring 94 der Arretiervorrichtung 90 ist drehfest in einen Lagerflansch 96 aus Kunststoff des Winkelgetriebes 92 eingespritzt, der über vier Befestigungsschrauben 138 an einem Getriebegehäuse 106 des Winkelgetriebes 92 fixierbar ist. Ferner sind auf der Abtriebswelle 100 ein aufgepreßtes Kugellager 166, ein Filzring 134 mit Schmiermittel und eine Staubkappe 136 angeordnet.

Die Arretiervorrichtung 90 besitzt das gleiche Funktionsprinzip wie die Arretiervorrichtung 18, wobei die Scheibe 42 drehfest auf einem Lagersitz 36 auf der Abtriebswelle 100 und das Tellerrad 110 drehbar auf einem Lagersitz 38 auf der Abtriebswelle 100 angeordnet sind. Ein Antriebsmoment des Elektromotors wird über ein Ritzel 140, das Tellerrad 110, über die Abtriebsscheibe 156, die Klauen 158, 160, 162, 164 und über die Mitnahmeelemente 32, 34 der Scheibe 42 auf die Abtriebswelle 100 übertragen. Ein Drehmoment von der Abtriebswelle 100 in Richtung des Elektromotor wird über die Scheibe 42, die Wälzkörper 44, 46, über den Arretierring 94, über den Lagerflansch 96 und über die Befestigungsschrauben 138 am Getriebegehäuse 106 abgestützt.

Im Gegensatz zur Arretiervorrichtung 86 im Ausführungsbeispiel in Fig. 9 ist die Arretiervorrichtung 90 im Kraftfluß des Elektromotors nach dem Winkelgetriebe 92 der Winkelschleifmaschine angeordnet.

### Bezugszeichen

- 10: Abtriebswelle
- 12: Werkzeughalterung
- 14: Spannvorrichtung
- 16: Werkzeug
- 18: Arretiervorrichtung
- 20: Maschinengehäuse
- 22: Zahnrad
- 24: Klaue
- 26: Klaue
- 28: Klaue
- 30: Klaue
- 32: Mitnahmeelement
- 34: Mitnahmeelement
- 36: Lagersitz
- 38: Lagersitz
- 40: Richtung
- 42: Scheibe
- 44: Körper
- 46: Körper
- 48: Körper
- 50: Bauteil
- 52: Bauteil
- 54: Nadellager
- 56: Rastscheibe
- 58: Lagerbrücke
- 60: Nadellager.
- 62: Gewindeverbindung
- 64: Rastenschlagwerk
- 66: Rasten
- 68: Druckfeder
- 70: Rasten
- 72: Antriebswelle
- 74: Abflachung
- 76: Abflachung
- 78: Abflachung
- 80: Abflachung
- 82: Abflachung
- 84: Abflachung
- 86: Arretiervorrichtung
- 88: Winkelgetriebe
- 90: Arretiervorrichtung
- 92: Winkelgetriebe
- 94: Arretierring
- 96: Lagerflansch
- 98: Abtriebswelle
- 100: Abtriebswelle
- 102: Werkzeughalterung
- 104: Werkzeug
- 106: Gehäuseteil
- 108: Zahnrad
- 110: Zahnrad
- 112: Gehäuse
- 114: Handgriff
- 116: Handgriff
- 118: Lüfterrad
- 120: Sprengring
- 122: Beilagescheibe
- 124: Filzring
- 126: Kugellager
- 128: Gummiring
- 130: Arretierring
- 132: Wellenverzahnung
- 134: Filzring
- 136: Staubkappe
- 138: Befestigungsschraube
- 140: Ritzel
- 142: Abtriebsscheibe
- 144: Klaue
- 146: Klaue
- 148: Klaue
- 150: Klaue
- 152: Innenverzahnung
- 154: Gleitlager
- 156: Abtriebsscheibe
- 158: Klaue
- 160: Klaue
- 162: Klaue
- 164: Klaue
- 166: Kugellager

## Patentansprüche

1. Handwerkzeugmaschine mit einer über einen Antriebsmotor und über eine Abtriebswelle (10, 98, 100) zumindest drehend antreibbaren Werkzeughalterung (12, 102), die eine in Drehrichtung der Abtriebswelle (10, 98, 100) betätigbare Spannvorrichtung (14) zur Befestigung von Werkzeugen (16, 104) aufweist, und mit einer Arretiervorrichtung (18, 86, 90), über die die Abtriebswelle (10, 98, 100) zum Schließen und Lösen der Spannvorrichtung (14) gegenüber einem Gehäuseteil (20, 106) drehfest koppelbar ist, und die bei einer Drehmomentübertragung vom Antriebsmotor zur Werkzeughalterung (12, 102) selbsttätig öffnet und bei einer Drehmomentübertragung von der Werkzeughalterung (12, 102) zum Antriebsmotor selbsttätig sperrt, wobei die Arretiervorrichtung (18, 86, 90) auf der Abtriebswelle (10, 98, 100) angeordnet und ein Teil der Arretiervorrichtung (18, 86, 90) von einem auf der Abtriebswelle (10, 98, 100) angeordneten Zahnrad (22, 108, 110) gebildet ist und die Arretiervorrichtung (18, 90) als Klauenkupplung ausgebildet ist, die zumindest eine Klaue (24, 26, 28, 30) aufweist, **dadurch gekennzeichnet, daß** die Klaue im Zahnrad (22, 110) eingepreßt ist.

2. Handwerkzeugmaschine nach Anspruch 1, **dadurch gekennzeichnet, daß** die Klaue (24, 26, 28, 30) von einem Bolzen mit einer runden Querschnittsfläche gebildet ist.

3. Handwerkzeugmaschine nach Anspruch 1 oder 2, **dadurch gekennzeichnet, daß** die Arretiervorrichtung (18, 90) eine Scheibe (42) aufweist, die zumindest ein Mitnahmeelement (32, 34) zur Drehmomentübertragung aufweist, wobei die Scheibe (42) drehfest auf einem ersten Lagersitz (36) der Abtriebswelle (10, 100) und das Zahnrad (22, 110) drehbar auf einem zweiten Lagersitz (38) der Abtriebswelle (10, 100) angeordnet sind.

4. Handwerkzeugmaschine nach Anspruch 3, **dadurch gekennzeichnet, daß** die Abtriebswelle (10) über die Scheibe (42) in zumindest eine axiale Richtung (40) fixiert ist.

5. Handwerkzeugmaschine nach Anspruch 3 oder 4, **dadurch gekennzeichnet, daß** die Abtriebswelle (10, 100) im Bereich des ersten Lagersitzes (36) einen von einer Zylinderform abweichenden Querschnitt zur Bildung eines geometrischen Formschlusses mit der Scheibe (42) hat.

6. Handwerkzeugmaschine nach einem der Ansprüche 3 bis 5, **dadurch gekennzeichnet, daß** die Scheibe (42) auf einer der Werkzeughalterung (12) zugewandten Seite des Zahnrads (22) angeordnet ist.

7. Handwerkzeugmaschine nach einem der Ansprüche 3 bis 6, **dadurch gekennzeichnet, daß** in einer Sperrstellung der Arretiervorrichtung (18) die Abtriebswelle (10) über die Scheibe (42) und über zumindest einen Körper (44, 46, 48) in einem Bauteil (50) in Drehrichtung abgestützt ist, über das zudem Lagerkräfte der Abtriebswelle (10) im Gehäuseteil (20) abgestützt sind.

8. Handwerkzeugmaschine nach Anspruch 7, **dadurch gekennzeichnet, daß** die Lagerkräfte im Bauteil (50) über ein zum Bauteil (50) separat ausgeführtes, topfförmiges Bauteil (52) abgestützt sind.

9. Handwerkzeugmaschine nach einem der vorhergehenden Ansprüche, **dadurch gekennzeichnet, daß** die Arretiervorrichtung (86) im Kraftfluß des Antriebsmotors vor einem Winkelgetriebe (88) angeordnet ist.

10. Handwerkzeugmaschine nach einem der Ansprüche 1 bis 8, **dadurch gekennzeichnet, daß** die Arretiervorrichtung (90) im Kraftfluß des Antriebsmotors nach einem Winkelgetriebe (92) angeordnet ist.

11. Handwerkzeugmaschine nach Anspruch 9 oder 10, **dadurch gekennzeichnet, daß** zumindest ein Teil (94) der Arretiervorrichtung (90) durch die Herstellung eines Bauteils (96) des Winkelgetriebes (92) mit diesem Bauteil (96) fest verbunden ist.

12. Handwerkzeugmaschine nach Anspruch 10 und 11, **dadurch gekennzeichnet, daß** ein Arretierring (94) der Arretiervorrichtung (90) in einem Lagerflansch (96) des Winkelgetriebes (92) eingespritzt ist.

## Claims

1. Powered hand tool comprising a tool holder (12, 102) which can be driven at least rotationally via a drive motor and via an output shaft (10, 98, 100) and has a clamping device (14) which can be actuated in the direction of rotation of the output shaft (10, 98, 100) and is intended for the fastening of tools (16, 104), and comprising a locking device (18, 86, 90), via which the output shaft (10, 98, 100), for closing and releasing the clamping device (14), can be coupled in a rotationally fixed manner relative to a housing part (20, 106) and which opens automatically during a torque transmission from the drive motor to the tool holder (12, 102) and locks automatically during a torque transmission from the tool holder (12, 102) to the drive motor, the locking device (18, 86, 90) being arranged on the output shaft (10, 98, 100), and part of the locking device (18, 86, 90) being formed by a gear (22, 108, 110) arranged on the output shaft (10, 98, 100), and the locking device (18, 90) being designed as a claw clutch which has at least one claw (24, 26, 28, 30), **characterized in that** the claw is pressed in place in the gear (22, 110).

2. Powered hand tool according to Claim 1, **characterized in that** the claw (24, 26, 28, 30) is formed by a stud having a round cross-sectional area.

3. Powered hand tool according to Claim 1 or 2, **characterized in that** the locking device (18, 90) has a disc (42) which has at least one driving element (32, 34) for the torque transmission, the disc (42) being arranged in a rotationally fixed manner on a first bearing seat (36) of the output shaft (10, 100), and the gear (22, 110) being rotatably arranged on a second bearing seat (38) of the output shaft (10, 100).

4. Powered hand tool according to Claim 3, **characterized in that** the output shaft (10) is fixed in at least one axial direction (40) via the disc (42).

5. Powered hand tool according to Claim 3 or 4, **characterized in that** the output shaft (10, 100), in the region of the first bearing seat (36), has a cross section deviating from a cylinder shape for forming a geometrical form fit with the disc (42).

6. Powered hand tool according to one of Claims 3 to 5, **characterized in that** the disc (42) is arranged on a side of the gear (22) facing the tool holder (12).

7. Powered hand tool according to one of Claims 3 to 6, **characterized in that**, in a locking position of the locking device (18), the output shaft (10), via the disc (42) and via at least one body (44, 46, 48), is supported in the direction of rotation in a component (50), via which, in addition, bearing forces of the output shaft (10) are absorbed in the housing part (20).

8. Powered hand tool according to Claim 7, **characterized in that** the bearing forces are absorbed in the component (50) via a pot-shaped component (52) designed separately from the component (50).

9. Powered hand tool according to one of the preceding claims, **characterized in that** the locking device (86) is arranged upstream of an angular gearing (88) in the flow of force of the drive motor.

10. Powered hand tool according to one of Claims 1 to 8, **characterized in that** the locking device (90) is arranged downstream of an angular gearing (92) in the flow of force of the drive motor.

11. Powered hand tool according to Claim 9 or 10, **characterized in that** at least one part (94) of the locking device (90) is firmly connected to a component (96) of the angular gearing (92) by the production of this component (96).

12. Powered hand tool according to Claims 10 and 11, **characterized in that** a locking ring (94) of the locking device (90) is injection moulded in a bearing flange (96) of the angular gearing (92).

## Revendications

1. Machine-outil à main comprenant
- un support d'outil (12, 102) pouvant être entraîné au moins en rotation par un moteur d'entraînement et un arbre de sortie (10, 98, 100), qui présente un dispositif de serrage (14) pouvant être actionné dans le sens de la rotation de l'arbre de sortie (10, 98, 100) pour fixer des outils (16, 104), et
- un dispositif de blocage (18, 86, 90) qui, en bloquant en rotation par rapport à un élément de boîtier l'arbre de sortie (10, 98, 100) pour fermer et desserrer le dispositif de serrage (14), s'ouvre automatiquement lors de la transmission d'un couple de rotation du moteur d'entraînement au support d'outil (12, 102), et se bloque automatiquement lors de la transmission d'un couple de rotation du support d'outil (12, 102) au moteur d'entraînement,
- le dispositif de blocage (18, 86, 90) étant disposé sur l'arbre de sortie (10, 98, 100) et une partie du dispositif de blocage (18, 86, 90) étant une roue dentée (22, 108, 110) montée sur l'arbre de sortie (10, 98, 100), ce dispositif de blocage (18, 90) présentant la forme d'un accouplement à griffes avec au moins une griffe (24, 26, 28, 30),
**caractérisée en ce que**
la griffe est enfoncée dans la roue dentée (22, 110).

2. Machine-outil à main selon la revendication 1,
**caractérisée en ce que**
la griffe (24, 26, 28, 30) est formée par un boulon avec une surface de section transversale ronde.

3. Machine-outil à main selon la revendication 1 ou 2,
**caractérisée en ce que**
le dispositif de blocage (18, 90) comporte un disque (42), qui présente au moins un élément d'entraînement (32, 34) pour la transmission d'un couple de rotation, le disque (42) étant solidaire en rotation sur un premier coussinet (36) de l'arbre de sortie (10, 100) et la roue dentée (22, 110) étant rotative sur un deuxième coussinet (38) de l'arbre de sortie (10, 100).

4. Machine-outil à main selon la revendication 3,
**caractérisée en ce que**
l'arbre de sortie (10) est fixé par l'intermédiaire du disque (42) dans au moins une direction axiale (40).

5. Machine-outil à main selon la revendication 3 ou 4,
**caractérisée en ce que**
l'arbre de sortie (10, 100), dans la zone du premier coussinet (36), comporte une section transversale différente d'une forme cylindrique pour réaliser une complémentarité de forme géométrique avec le disque (42).

6. Machine-outil à main selon l'une quelconque des revendications 3 à 5,
**caractérisée en ce que**
le disque (42) est disposé sur une face de la roue dentée (22) située en regard du support d'outil (12).

7. Machine-outil à main selon l'une quelconque des revendications 3 à 6,
**caractérisée en ce que**
dans une position de blocage du dispositif de blocage (18) l'arbre de sortie (10) est soutenu dans le sens de la rotation par le disque (42) et au moins un corps (44, 46, 48) dans un composant (50), par lequel des forces de coussinet de l'arbre de sortie (10) sont également soutenues dans la partie de boîtier (20).

8. Machine-outil à main selon la revendication 7,
**caractérisée en ce que**
les forces de coussinet dans le composant (50) sont soutenues par un composant (52) en forme de pot réalisé séparément du composant (50).

9. Machine-outil à main selon l'une quelconque des revendications précédentes,
**caractérisée en ce que**
le dispositif de blocage (86) est disposé dans le flux de puissance du moteur d'entraînement en amont d'un engrenage d'angle (88).

10. Machine-outil à main selon l'une quelconque des revendications 1 à 8,
**caractérisée en ce que**
le dispositif de blocage (90) est disposé dans le flux de puissance du moteur d'entraînement en aval d'un engrenage d'angle (92).

11. Machine-outil à main selon la revendication 9 ou 10,
**caractérisée en ce qu'**
au moins une partie (94) du dispositif de blocage (90) est fixée à un composant (96) réalisé dans l'engrenage d'angle (92).

12. Machine-outil à main selon la revendication 10 et 11,
**caractérisée en ce qu'**
une bague de blocage (94) du dispositif de blocage (90) est injectée dans une bride de logement (96) de l'engrenage d'angle (92).
